# EUROPEAN PATENT SPECIFICATION

(11) **EP 4 168 357 B1**
(45) Date of publication and mention of the grant of the patent: **22.10.2025**
(21) Application number: 21739437.8
(22) Date of filing: 14.06.2021
(51) Int. Cl.: C01B 17/02, H05B 6/00

(54) **APPARATUS FOR SOLIDIFYING LIQUID SULPHUR INTO ORTHORHOMBIC CRYSTALS AND RELATED METHOD**
VORRICHTUNG ZUR VERFESTIGUNG VON FLÜSSIGEM SCHWEFEL IN ORTHORHOMBISCHE KRISTALLE UND ZUGEHÖRIGES VERFAHREN
APPAREIL DE SOLIDIFICATION DE SOUFRE LIQUIDE EN CRISTAUX ORTHORHOMBIQUES ET PROCÉDÉ ASSOCIÉ

(30) Priority: 22.06.2020 IT 202000014887
(43) Date of publication of application: 26.04.2023
(73) Proprietor: Cometti, Carlo Alberto, 40124 Bologna (BO) (IT)
(72) Inventor: Cometti, Carlo Alberto, 40124 Bologna (BO) (IT)
(74) Representative: Montebelli, Marco
(86) International application number: PCT/IB2021/055208
(87) International publication number: WO 2021/260484

(56) References cited:
- EP-A2- 2 699 515
- WO-A1-2018/189209
- US-A- 4 139 347

## Description

### Technical field

This invention relates to an apparatus for solidifying liquid sulphur into orthorhombic crystals and related method.

Sulphur is one of the most abundant naturally occurring elements: it is found pure in regions in which active volcanoes are present, together with other elements in many hydrocarbons and in the form of sulphides and sulphates in many minerals.

Sulphur is essential to the life of any cell, in living beings it can be found in two amino acids and many proteins. In agriculture it is widely used as a disinfectant, fungicide, fertiliser; in industry, through its sulphuric acid compound, it is one of the most important raw materials in every sector of chemistry: for example for paints, cleansing agents and many other products; it is also used to produce batteries and detergents, medicines, in the vulcanisation of rubber, for preparing gunpowder, and its use as a container for toxic and radioactive waste is currently being considered.

Sulphur is extracted from the compounds which contain it in various ways: whilst until around a century ago sulphur production was chiefly of mining origin, Italy having held the leading position above all thanks to Sicilian mines, nowadays more than 90% of world production derives from plants for desulphurization of hydrocarbons in the oil industry, causing huge safety problems for storage and transportation.

Liquid sulphur, industrially available at temperatures of between 120°C and 140°C, at normal pressure starts to crystallise at around 115°C: however, in the range roughly between 115°C and 95°C, the crystals that form have a monoclinic structure which becomes unstable below 95°C and tends to pass to a orthorhombic structure which occupies a smaller volume due to redistribution of the atoms, which occurs unevenly.

Unfortunately, this conversion of the crystalline structure involves the breaking down of the sulphur blocks with consequent production of dusts, which can cause explosions upon contact with the oxygen in the air, and of gases generated by reactions of the dusts with volatile substances with which they may come into contact: sulphur dioxide (SO₂), sulphur trioxide (SO3) and hydrogen sulphide (H₂S), from which sulphuric acid can be formed on contact with water.

That means that both storage and transportation of sulphur blocks create serious health difficulties for operators in this sector and considerably reduce their life expectancy.

### Background Art

The heart of the problem is preventing the liquid sulphur from crystallising in the monoclinic form, avoiding its solidification in the temperature range approximately between 115°C and 95°C.

One possibility is given by cooling the sulphur at very high pressures, higher than 1000kg/cm², but the system becomes quite complex and hazardous.

At normal pressures, it has been seen that the formation of monoclinic twinned crystals is inhibited by administering non-thermal energy during cooling.

There are methods described in patent documents, for example in WO2012/143387, in which elastic waves are applied to the liquid sulphur to allow, during the solidification and cooling step, the sulphur to be kept in a metastable state, characterised by the simultaneous presence of the liquid phase and of the crystalline phase, to temperatures lower than 100°C, with a view to avoiding crystallisations of the sulphur in monoclinic form. However, unfortunately, the experiments carried out with this technique demonstrated the objective difficulty of homogeneously spreading the vibrations throughout the whole mass of the liquid sulphur, with the consequence of obtaining a nonhomogeneous end product, in which, in the zones not reached by the elastic waves, it has not been possible to avoid crystallising of the sulphur in its monoclinic form.

Document US4139347 describes a cooling process for liquid sulphur, at the end of which it was observed that more than 90% of the crystalline sulfur thus obtained has an orthorhombic structure, but the remaining 10% with a monoclinic structure still has the problem of generating toxic dusts during its cooling between 115 ° and 95 °.

In particular, the method is based on two subsequent treatments with a cooling liquid. More in detail, there is a preliminary step wherein the liquid sulfur is cooled to about 118°-123° C. Then there is a first treatment of the liquid sulfur wherein the cooling liquid is at a temperature ranging between 93°-110° C. Then, after a certain time, there is a second treatment of the liquid sulfur wherein the cooling liquid is at a temperature ranging between 90°-107° C.

Document WO2018 / 189209 discusses a method for heating liquids and solids through the use of an electromagnetic field source, whose energy is absorbed by an absorber element, which can transfer heat, such as a metal tube. However, there is no example referring to the cooling of a liquid thanks to this method and also the heating occurs by means of an element that is inside the liquid to be heated. Furthermore, the heating examples reported refer to temperature ranges well below 100 ° C, far from the solidification temperature of the sulfur.

### Disclosure of the invention

The aim of this invention is therefore to eliminate the above-mentioned disadvantages. That aim is achieved by exploiting, in an unexpected way, the effectiveness of an electromagnetic field on the liquid sulphur, despite sulphur not being a metal.

The main advantage obtained by means of this invention is essentially the fact that the liquid sulphur, when struck by electromagnetic waves during the cooling process gives rise to a pasty homogeneous product in which there is no trace of monoclinic crystals. By lowering the temperature below 95 ° C, the production of solid sulfur in a compact and homogeneous mass in a totally orthorhombic form takes place without any contact with the outside, thereby avoiding any potential contamination of the operators and the surrounding environment.

The absence of monoclinic crystals in the solid sulphur guarantees that no dusts and gases are emitted during storage and transportation, avoiding at source the formation of acids and vapors, and the consequent possibility of explosions and poisoning.

Finally, the sulphur obtained in such a way is easily packageable as to have it ready for the most diverse uses: from agriculture to the chemical - pharmaceutical sector, to industry in general.

### Brief Description of the Drawings

Further advantages and features of the invention will be more apparent in the detailed description which follows, with reference to the accompanying drawings, which illustrate a non-limiting example embodiment, in which:

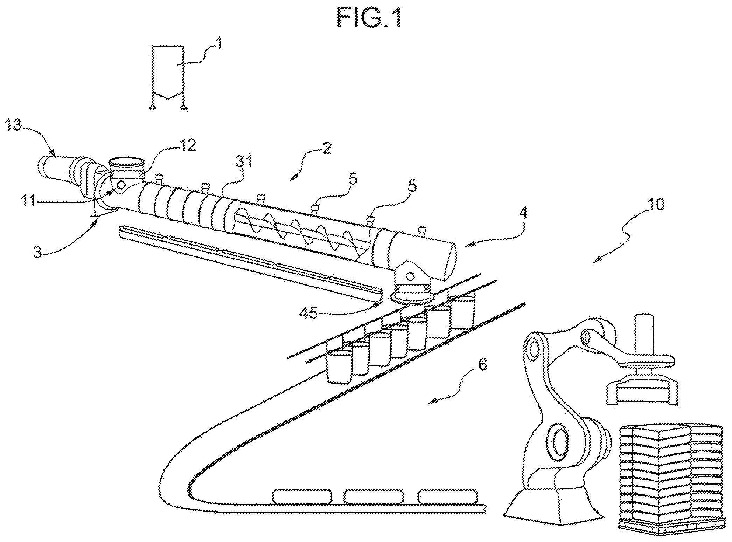

- Figure 1 is an overview of the invention;

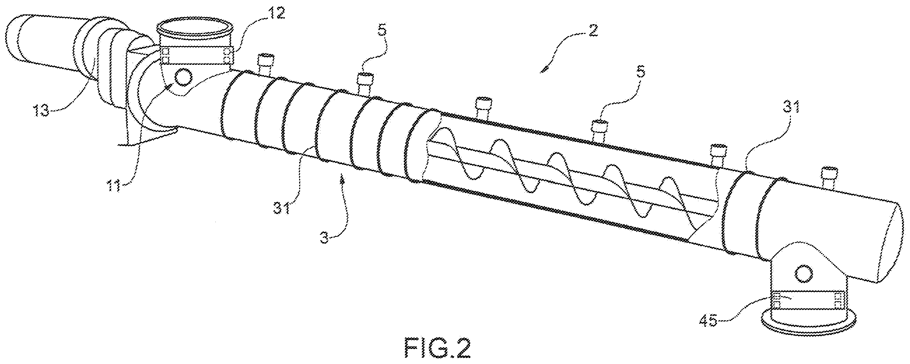

- Figure 2 shows a detail of the invention, with some parts cut away to better illustrate others;

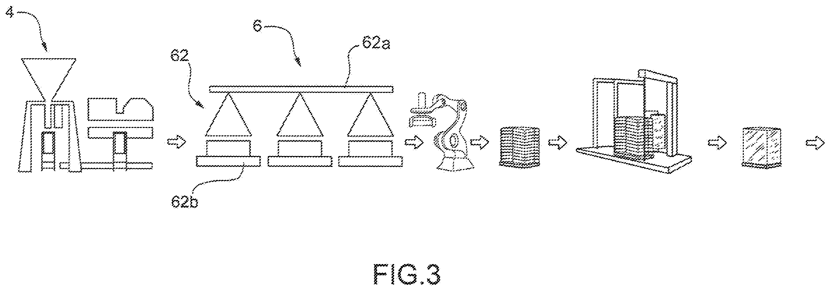

- Figure 3 is a schematic illustration of a part of the method;
- la Figure 4 shows a detail of the part of the method of Figure 3;

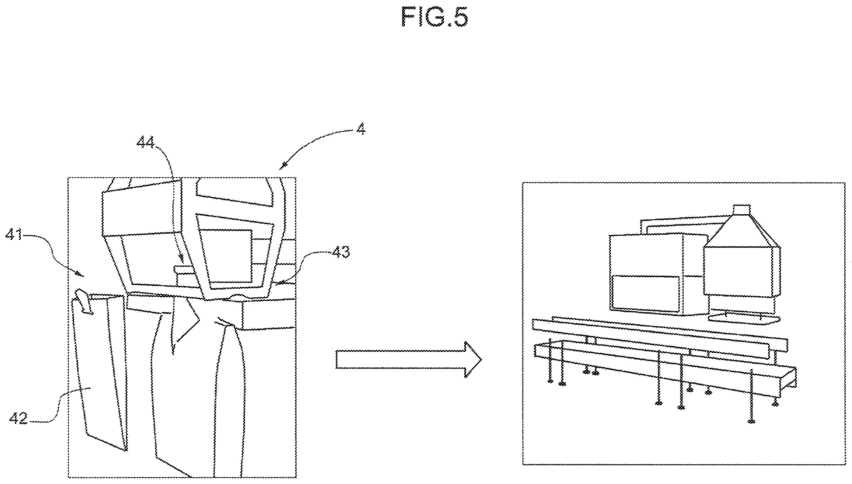

- Figure 5 shows a further detail of the invention;
- Figure 6 shows the simplified phase diagram for the sulphur, in which the cooling line at atmospheric pressure has been highlighted.

### Preferred embodiment of the invention

As can be seen from the figures, this invention relates to an apparatus for solidifying liquid sulphur into orthorhombic crystals and the related method.

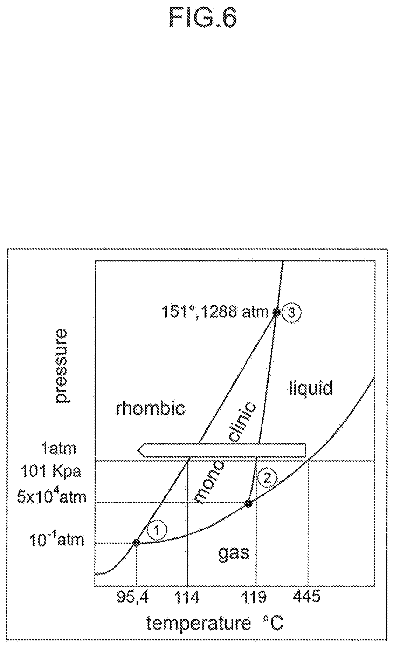

The apparatus (10) comprises a liquid sulphur feeding tank (1), connected to a sulphur cooling screw feeder (2), at least one electromagnetic field source (3), for example a solenoid (31), passed through by electric current, which externally surrounds the screw feeder (2), acting on the sulphur in such a way as to prevent it from crystallising in the monoclinic form above around 100°C. Indeed, as shown in Figure 6, at atmospheric pressure the sulphur would start to crystallise in the monoclinic form at just below 120°C: however, during the course of the cooling process, and in particular around about 100 ° C, the monoclinic form would become unstable and would tend to transform unevenly into a non-compact disaggregated mass made up mostly of ortho-rombic crystals, producing potentially dangerous dusts and gases in contact with air and water.

Although sulfur is not a metal, but a diamagnetic substance, the action of the electromagnetic field surprisingly modifies the spin axis of the sulfur electrons and prevents the sulfur from starting its crystallization above about 100 ° C.

Immediately below this temperature, the sulfur begins to crystallize in an ortho-rhombic form, giving rise to a compact and homogeneous mass.

As an alternative to the solenoid (31), the source (3) of the electromagnetic field could be constituted by a plurality of permanent magnets (32) distributed along the surface of the screw feeder (2), even if not showned in the figures.

It may also be advantageous for the apparatus to comprise a plurality of ultrasonic generators (5) applied to the screw feeder (2), which are suitable for preventing the formation of sulphur deposits in the screw feeder.

Located downstream of the screw feeder (2), from which the sulphur comes out in a pasty form, formed by twinned crystals and liquid sulphur, there are, in order, a sulphur packaging station (4) and a packaged sulphur transporting and solidifying station (6).

A temperature sensor (11) allows detection of the temperature of the sulphur coming out of the tank (1), and a solenoid valve (12), controlled by the sensor (11), prevents the sulphur from entering the screw feeder (2) if the temperature detected by the sensor (11) is higher than a predetermined value. A variable speed drive (13) which drives the rotation of the screw feeder (2) allows definition of the sulphur transit time in the screw feeder (2), depending on the infeed temperature and the desired thermal gradient.

The packaging station (4) comprises an access solenoid valve (45), suitable for preventing the passage of the sulphur if the temperature is higher than a predetermined value, a feeding device (41) for feeding empty containers (42), for example multi-layer paper bags or barrels, a doser (43) for dosing the sulphur to be transferred into the containers (42), closing means (44) for closing the filled containers (42).

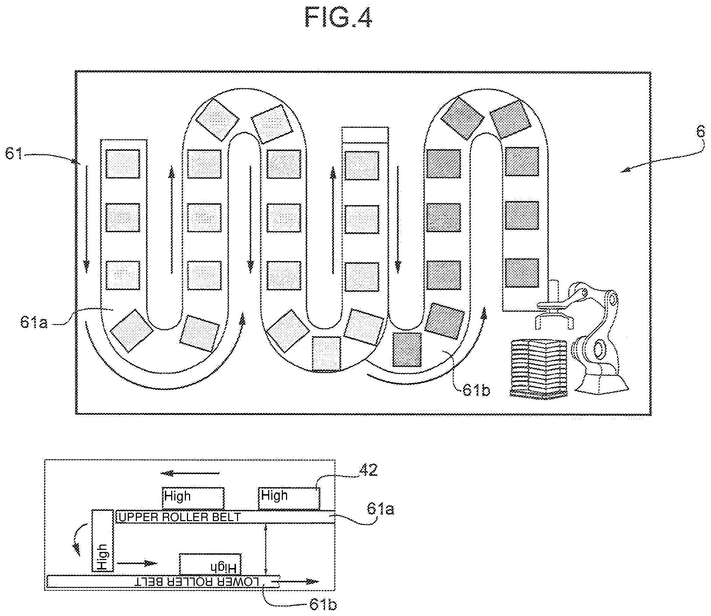

The subsequent transporting and solidifying station (6), shown in Figure 4, comprises at least one sliding belt (61), suitable for transferring the packaged sulphur during its further cooling. It is also preferable for the transporting and solidifying station (6) to comprise an upper belt (61a) and a lower belt (61b) which move forward in opposite directions, so that the falling of the containers (42) from the upper belt (61a) onto the lower belt (61b) favours container overturning, causing faster cooling of the sulphur.

The transporting and solidifying station (6) may also be provided with cooling means (62), such as a nebulising device (62a) and a ventilating device (62b), which are suitable for speeding up the cooling of the sulphur.

In these last stations, the solidification in orthorhombic form becomes complete, stable and irreversible, giving rise to compact and homogeneous blocks, unassailable by acid solutions, free from releases of gaseous and non-reactive emissions in water.

The method for solidifying liquid sulphur into orthorhombic crystals therefore comprises at least the following steps:
- storing the liquid sulphur in a feeding tank (1);
- feeding the liquid sulphur into a cooling screw feeder (2) subjected to the field generated by an electromagnetic field source (3), so as to prevent crystallisation of the sulphur in the monoclinic form above 100°C;
- packaging of the pasty sulphur coming out of the screw feeder (2) into empty containers (42);
- solidifying of the sulphur inside the containers (42) on at least one sliding belt (61).

It is appropriate for there to also be a step of overturning the containers (42) so as to speed up the cooling of the sulphur.

Finally, the method comprises a step of wrapping the containers (42) with plastic film, preferably black, so as to reduce the light sensitivity of the package.

## Claims

1. An apparatus for solidifying liquid sulphur into orthorhombic crystals, **characterised in that** it comprises at least one liquid sulphur feeding tank (1), connected to a sulphur cooling screw feeder (2), and at least one electromagnetic field source (3) external to the screw feeder (2), acting on the sulphur, in such a way as to prevent it from crystallising in the monoclinic form above 100°C.

2. The apparatus according to claim 1, **characterised in that** it comprises a sulphur packaging station (4) downstream of the screw feeder (2).

3. The apparatus according to claim 1, **characterised in that** it comprises at least one ultrasonic generator (5) applied to the screw feeder (2), suitable for preventing the formation of deposits in the screw feeder (2).

4. The apparatus according to claim 2, **characterised in that** it comprises a packaged sulphur transporting and solidifying station (6).

5. The apparatus according to claim 1, **characterised in that** it comprises a temperature sensor (11), suitable for detecting the temperature of the sulphur coming out of the feeding tank (1), and a solenoid valve (12), controlled by the sensor (11), suitable for preventing the sulphur from entering the screw feeder (2) if the temperature detected by the sensor (11) is higher than a predetermined value.

6. The apparatus according to claim 1, **characterised in that** the electromagnetic field source (3) comprises a solenoid (31) surrounding the screw feeder (2), said solenoid (31) being passed through by an electric current flow.

7. The apparatus according to claim 1, **characterised in that** the electromagnetic field source (3) comprises a plurality of permanent magnets (32) distributed along the surface of the screw feeder (2).

8. The apparatus according to claim 1, **characterised in that** it comprises a variable speed drive (13), suitable for determining the sulphur transit time in the screw feeder (2).

9. The apparatus according to claim 2, **characterised in that** the packaging station (4) comprises an access solenoid valve (45), suitable for preventing the passage of the sulphur if the temperature is higher than a predetermined value, a feeding device (41) for feeding empty containers (42), a doser (43) for dosing the sulphur to be transferred into the containers (42), closing means (44) for closing the filled containers (42).

10. The apparatus according to claim 4, **characterised in that** the transporting and solidifying station (6) comprises at least one sliding belt (61), suitable for transferring the packaged sulphur during its cooling.

11. The apparatus according to claim 10, **characterised in that** the transporting and solidifying station (6) comprises an upper belt (61a) and a lower belt (61b) which move forward in opposite directions so as to favour overturning of the packaged sulphur.

12. The apparatus according to claim 4, **characterised in that** the transporting and solidifying station (6) comprises cooling means (62), suitable for speeding up the cooling of the sulphur.

13. The apparatus according to claim 12, **characterised in that** the cooling means (62) comprise a nebulising device (62a).

14. The apparatus according to claim 12, **characterised in that** the cooling means (62) comprise a ventilating device (62b).

15. A method for solidifying liquid sulphur into orthorhombic crystals, **characterised in that** it comprises at least the following steps:
- storing the liquid sulphur in a feeding tank (1);
- feeding the liquid sulphur into a cooling screw feeder (2) subjected to the field generated by an electromagnetic field source (3), so as to prevent crystallisation of the sulphur in the monoclinic form above 100°C;
- packaging of the pasty sulphur coming out of the screw feeder (2) into empty containers (42);
- solidifying of the sulphur inside the containers (42) on at least one sliding belt (61).

16. The method according to claim 15, **characterised in that** it comprises a step of overturning the containers (42) so as to speed up the cooling of the sulphur.

17. The method according to claim 15 or 16, **characterised in that** it comprises a step of wrapping the containers (42) with black plastic film, so as to reduce their light sensitivity.

## Patentansprüche

1. Eine Vorrichtung zur Verfestigung von flüssigem Schwefel in orthorhombische Kristalle, **dadurch gekennzeichnet, dass** sie mindestens einen Zufuhrbehälter für flüssigen Schwefel (1), der mit einer schwefelkühlenden Schneckenzuführung (2) verbunden ist, und mindestens eine Quelle eines elektromagnetischen Felds (3), die außerhalb der Schneckenzuführung (2) liegt, die dabei solcherart auf den Schwefel einwirkt, dass sie verhindert, dass sich dieser bei mehr als 100 °C in eine monokline Form kristallisiert, beinhaltet.

2. Die Vorrichtung nach dem Patentanspruch 1, **dadurch gekennzeichnet, dass** sie eine der Schneckenzuführung (2) nachgeschaltete Schwefelverpackungsstation (4) beinhaltet.

3. Die Vorrichtung nach dem Patentanspruch 1, **dadurch gekennzeichnet, dass** sie mindestens einen Ultraschallgenerator (5), der an der Schneckenzuführung (2) angebracht ist, der sich dazu eignet, die Bildung von Ablagerungen in der Schneckenzuführung (2) zu verhindern, beinhaltet.

4. Die Vorrichtung nach dem Patentanspruch 2, **dadurch gekennzeichnet, dass** sie eine Transport- und Verfestigungsstation für verpackten Schwefel (6) beinhaltet.

5. Die Vorrichtung nach dem Patentanspruch 1, **dadurch gekennzeichnet, dass** sie einen Temperatursensor (11), der sich dazu eignet, die Temperatur des aus dem Zuführbehälter (1) kommenden Schwefels zu erfassen, und ein Magnetventil (12), das vom Sensor (11) gesteuert wird, das sich dazu eignet, den Schwefel daran zu hindern, in die Schneckenzuführung (2) einzufließen, wenn die vom Sensor (11) erfasste Temperatur höher als ein vorher festgelegter Wert ist, beinhaltet.

6. Die Vorrichtung nach dem Patentanspruch 1, **dadurch gekennzeichnet, dass** die Quelle des elektromagnetischen Felds (3) ein Solenoid (31), das die Schneckenzuführung (2) umschließt, beinhaltet, besagtes Solenoid (31) wird dabei von einem elektrischen Stromfluss durchströmt.

7. Die Vorrichtung nach dem Patentanspruch 1, **dadurch gekennzeichnet, dass** die Quelle des elektromagnetischen Felds (3) eine Mehrzahl von Permanentmagneten (32), die über die Oberfläche der Schneckenzuführung (2) verteilt sind, beinhaltet.

8. Die Vorrichtung nach dem Patentanspruch 1, **dadurch gekennzeichnet, dass** sie einen drehzahlvariablen Antrieb (13) beinhaltet, der sich dazu eignet, die Durchflusszeit des Schwefels in der Schneckenzuführung (2) zu bestimmen.

9. Die Vorrichtung nach dem Patentanspruch 2, **dadurch gekennzeichnet, dass** die Verpackungsstation (4) ein Zugangsmagnetventil (45), das sich dazu eignet, den Durchfluss des Schwefels zu verhindern, wenn die Temperatur höher als ein vorher festgelegter Wert ist, eine Zufuhrvorrichtung (41) zur Zuführung leerer Behälter (42), einen Dosierer (43) zur Dosierung des Schwefels, der in die Behälter (42) übertragen werden soll, Schließmittel (44) zum Verschließen der gefüllten Behälter (42) beinhaltet.

10. Die Vorrichtung nach dem Patentanspruch 4, **dadurch gekennzeichnet, dass** die Transport- und Verfestigungsstation (6) mindestens ein Gleitband (61) beinhaltet, das sich dazu eignet, den verpackten Schwefel zu transportieren, während er abkühlt.

11. Die Vorrichtung nach dem Patentanspruch 10, **dadurch gekennzeichnet, dass** die Transport- und Verfestigungsstation (6) ein oberes Band (61a) und ein unteres Band (61b) beinhaltet, die sich in entgegen gesetzte Richtungen vorwärtsbewegen, um das Wenden des verpackten Schwefels zu unterstützen.

12. Die Vorrichtung nach dem Patentanspruch 4, **dadurch gekennzeichnet, dass** die Transport- und Verfestigungsstation (6) Kühlmittel (62) beinhaltet, die sich dazu eignen, die Abkühlung des Schwefels zu beschleunigen.

13. Die Vorrichtung nach dem Patentanspruch 12, **dadurch gekennzeichnet, dass** die Kühlmittel (62) eine Verneblervorrichtung (62a) beinhalten.

14. Die Vorrichtung nach dem Patentanspruch 12, **dadurch gekennzeichnet, dass** die Kühlmittel (62) eine Lüftungsvorrichtung (62b) beinhalten.

15. Ein Verfahren zur Verfestigung von flüssigem Schwefel in orthorhombische Kristalle, **dadurch gekennzeichnet**, das es mindestens folgende Schritte beinhaltet:
- Aufbewahrung des flüssigen Schwefels in einem Zufuhrbehälter (1);
- Zuführung des flüssigen Schwefels in eine kühlende Schneckenzuführung (2), die dem von einer Quelle eines elektromagnetischen Felds (3) generierten Feld ausgesetzt ist, um die Kristallisierung des Schwefels in die monokline Form bei mehr als 100 °C zu verhindern;
- Verpackung des pastösen Schwefels, der aus der Schneckenzuführung (2) kommt, in leere Behälter (42);
- Verfestigung des Schwefels in den Behältern (42) auf mindestens einem Gleitband (61).

16. Das Verfahren nach dem Patentanspruch 15, **dadurch gekennzeichnet, dass** es einen Schritt des Wendens der Behälter (42), um das Abkühlen des Schwefels zu beschleunigen, beinhaltet.

17. Das Verfahren nach dem Patentanspruch 15 oder 16, **dadurch gekennzeichnet, dass** es einen Schritt des Umwickelns der Behälter (42) mit schwarzer Kunststofffolie, um ihre Lichtempfindlichkeit zu senken, beinhaltet.

## Revendications

1. Un appareil de solidification de soufre liquide en cristaux orthorhombiques, **caractérisé en ce qu'**il comprend au moins un réservoir (1) d'alimentation de soufre liquide, raccordé à une vis sans fin (2) de refroidissement du soufre, et au moins une source de champ électromagnétique (3) externe à la vis sans fin (2), agissant sur le soufre, de manière à l'empêcher de cristalliser dans la forme monoclinique au-dessus de 100°C.

2. L'appareil selon la revendication 1, **caractérisé en ce qu'**il comprend une station (4) de conditionnement du soufre en aval de la vis sans fin (2).

3. L'appareil selon la revendication 1, **caractérisé en ce qu'**il comprend au moins un générateur d'ultrasons (5) appliqué à la vis sans fin (2), destiné à empêcher la formation de dépôts dans la vis sans fin (2).

4. L'appareil selon la revendication 2, **caractérisé en ce qu'**il comprend une station (6) de transport et de solidification du soufre conditionné.

5. L'appareil selon la revendication 1, **caractérisé en ce qu'**il comprend un capteur de température (11), destiné à détecter la température du soufre sortant du réservoir d'alimentation (1), et une électrovanne (12), commandée par le capteur (11), destinée à empêcher le soufre de pénétrer dans la vis sans fin (2) si la température détectée par le capteur (11) est supérieure à une valeur prédéfinie.

6. L'appareil selon la revendication 1, **caractérisé en ce que** la source de champ électromagnétique (3) comprend un solénoïde (31) entourant la vis sans fin (2), ledit solénoïde (31) étant parcouru par un flux de courant électrique

7. L'appareil selon la revendication 1, **caractérisé en ce que** la source de champ électromagnétique (3) comprend une pluralité d'aimants permanents (32) répartis le long de la surface de la vis sans fin (2).

8. L'appareil selon la revendication 1, **caractérisé en ce qu'**il comprend un entraînement (13) à vitesse variable, destiné à déterminer le temps de transit du soufre dans la vis sans fin (2).

9. L'appareil selon la revendication 2, **caractérisé en ce que** la station de conditionnement (4) comprend une électrovanne (45) d'accès, destinée à empêcher le passage du soufre si la température est supérieure à une valeur prédéfinie, un dispositif d'alimentation (41) pour alimenter des récipients (42) vides, un doseur (43) pour doser le soufre à transférer dans les récipients (42), des moyens de fermeture (44) pour fermer les récipients (42) remplis.

10. L'appareil selon la revendication 4, **caractérisé en ce que** la station de transport et de solidification (6) comprend au moins une bande (61) coulissante, destinée à transférer le soufre conditionné lors de son refroidissement.

11. L'appareil selon la revendication 10, **caractérisé en ce que** la station de transport et de solidification (6) comprend une bande supérieure (61a) et une bande inférieure (61b) qui avancent dans des directions opposées de manière à favoriser le retournement du soufre conditionné.

12. L'appareil selon la revendication 4, **caractérisé en ce que** la station de transport et de solidification (6) comprend des moyens de refroidissement (62), destinés à accélérer le refroidissement du soufre.

13. L'appareil selon la revendication 12, **caractérisé en ce que** les moyens de refroidissement (62) comprennent un dispositif de nébulisation (62a).

14. L'appareil selon la revendication 12, **caractérisé en ce que** les moyens de refroidissement (62) comprennent un dispositif de ventilation (62b).

15. Un procédé de solidification de soufre liquide en cristaux orthorhombiques, **caractérisé en ce qu'**il comprend au moins les étapes suivantes :
- stockage du soufre liquide dans un réservoir d'alimentation (1) ;
- alimentation du soufre liquide dans une vis sans fin de refroidissement (2) soumise au champ généré par une source de champ électromagnétique (3), de manière à empêcher la cristallisation du soufre dans la forme monoclinique au-dessus de 100°C ;
- conditionnement du soufre pâteux sortant de la vis sans fin (2) dans des récipients (42) vides ;
- solidification du soufre à l'intérieur des récipients (42) sur au moins une bande (61) coulissante.

16. Le procédé selon la revendication 15, **caractérisé en ce qu'**il comprend une étape consistant à retourner les récipients (42) de manière à accélérer le refroidissement du soufre.

17. Le procédé selon la revendication 15 ou 16, **caractérisé en ce qu'**il comprend une étape consistant à emballer les récipients (42) avec un film plastique noir, de manière à réduire leur sensibilité à la lumière.
